(19) 

Europäisches Patentamt

European Patent Office

Office européen des brevets

(11) **EP 4 518 335 A1**

(12) **EUROPEAN PATENT APPLICATION**
published in accordance with Art. 153(4) EPC

(43) Date of publication:
05.03.2025 Bulletin 2025/10

(51) International Patent Classification (IPC):
*H04N 23/12* (2023.01)    *H04N 23/54* (2023.01)
*H04N 23/71* (2023.01)

(21) Application number: 23795944.0

(52) Cooperative Patent Classification (CPC):
H04N 23/12; H04N 23/54; H04N 23/71

(22) Date of filing: 14.03.2023

(86) International application number:
PCT/JP2023/009946

(87) International publication number:
WO 2023/210197 (02.11.2023 Gazette 2023/44)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 27.04.2022 JP 2022073791

(71) Applicant: Sony Semiconductor Solutions
Corporation
Atsugi-shi, Kanagawa 243-0014 (JP)

(72) Inventors:
• MIZUTANI, Junya
  Atsugi-shi, Kanagawa 243-0014 (JP)

• ASAHARA, Takafumi
  Atsugi-shi, Kanagawa 243-0014 (JP)
• OKUIKE, Kazuyuki
  Atsugi-shi, Kanagawa 243-0014 (JP)
• KOBAYASHI, Naoto
  Atsugi-shi, Kanagawa 243-0014 (JP)
• NAKANO, Mariko
  Atsugi-shi, Kanagawa 243-0014 (JP)

(74) Representative: MFG Patentanwälte
Meyer-Wildhagen Meggle-Freund
Gerhard PartG mbB
Amalienstraße 62
80799 München (DE)

(54) **IMAGING DEVICE AND SIGNAL PROCESSING METHOD**

(57) An imaging device according to one embodiment of the present disclosure includes a multispectral sensor section, a narrowband signal generator, and a controller. The multispectral sensor section outputs a plurality of (N) wavelength signals as pixel signals. The narrowband signal generator uses a coefficient matrix to generate, from the plurality of wavelength signals output from the multispectral sensor, a plurality of M (M>N) narrowband signals that is narrower in bandwidth than the wavelength signa. The controller calculates an evaluation value by performing weighted average processing on the plurality of wavelength signals or a plurality detection values generated using the plurality of wavelength signals, and performs exposure control of the multispectral sensor section on the basis of the calculated evaluation value.

[ FIG. 1 ]

EP 4 518 335 A1

**Description**

Technical Field

The present disclosure relates to imaging devices and signal processing methods.

Background Art

Imaging devices enabling multispectral photography have been developed (see Patent Literatures 1 to 3, for example). Multispectral photography makes it possible to obtain a multispectral image using more wavelength bands in a single shot, than in photography with an RGB sensor that uses red (R), green (G), and blue (B) as the wavelengths for photography. Generally, a single wavelength band is used in auto exposure (AE) control.

Citation List

Patent Literature

Patent Literature 1: Japanese Unexamined Patent Application Publication No. 2018-98341
Patent Literature 2: Japanese Unexamined Patent Application Publication No. 2020-115640
Patent Literature 3: Japanese Unexamined Patent Application Publication No. 2007-127657

Summary of the Invention

For exposure control using only a single wavelength band, it is difficult to capture an image of a desired subject out of a plurality of subjects with large differences in illuminance, for example, with appropriate exposure. As a result, the resulting image may become saturated, for example, which may cause the image to appear overexposed or underexposed. It is therefore desirable to provide an imaging device and a signal processing method that enable proper exposure.

An imaging device according to one aspect of the present disclosure includes a multispectral sensor section, a narrowband signal generator, and a controller. The multispectral sensor section outputs a plurality of (N) wavelength signals as pixel signals. The narrowband signal generator uses a coefficient matrix to generate, from the plurality of wavelength signals output from the multispectral sensor, a plurality of M (M>N) narrowband signals that is narrower in bandwidth than the wavelength signa. The controller calculates an evaluation value by performing weighted average processing on the plurality of wavelength signals or a plurality detection values generated using the plurality of wavelength signals, and performs exposure control of the multispectral sensor section on the basis of the calculated evaluation value.

A signal processing method according to one aspect of the present disclosure includes the following two:

(A) generating, from pixel signals that are a plurality of (N) wave signals output from a multispectral sensor, a plurality of (M: M>N) narrowband signals narrower in bandwidth than the wavelength signals using a coefficient matrix; and
(B) calculating an evaluation value by performing weighted average processing on the plurality of wavelength signals or a plurality detection values generated using the plurality of wavelength signals, and performing exposure control of the multispectral sensor section on the basis of the calculated evaluation value.

The imaging device and signal processing method according to one aspect of the present disclosure perform weighted average processing on a plurality of wavelength signals, which are pixel signals output from the multispectral sensor, or a plurality detection values generated using the plurality of wavelength signals, thus calculating an evaluation value. They then perform exposure control of the multispectral sensor section on the basis of the calculated evaluation value. In this way, they perform weighted average processing on the plurality of wavelength signals or the plurality of detection values, which makes it possible to determine which channel of the multispectral sensor is to be given importance. As a result, they are able to effectively suppress degradation in the output plurality of narrowband signals.

Brief Description of the Drawings

[FIG. 1] FIG. 1 illustrates an example schematic configuration of an imaging device according to a first embodiment of the present disclosure.

[FIG. 2] FIG. 2 illustrates an example schematic configuration of an image acquisition section in FIG. 1.

[FIG. 3] FIG. 3 illustrates an example schematic configuration of a weighting coefficient determination section in FIG. 1.

[FIG. 4] FIG. 4 illustrates an example of a method for deriving weighting coefficients at the weighting coefficient determination section in FIG. 3.

[FIG. 5] FIG. 5 illustrates an example schematic configuration of an evaluation value calculator in FIG. 1.

[FIG. 6] FIG. 6 illustrates an example of AE control at the imaging device in FIG. 1.

[FIG. 7] FIG. 7 illustrates an example of spectral sensitivity characteristics of the image acquisition section in FIG. 1.

[FIG. 8] FIG. 8 illustrates a modification example of schematic configuration of the weighting coefficient determination section in FIG. 1.

[FIG. 9] FIG. 9 illustrates an example of a method for deriving weighting coefficients at the weighting coefficient determination section in FIG. 8.

[FIG. 10] FIG. 10 illustrates a modification example of schematic configuration of the imaging device in FIG. 1.

[FIG. 11] FIG. 11 illustrates an example schematic configuration of the weighting coefficient calculator in FIG. 10.

[FIG. 12] FIG. 12 illustrates an example of a method for deriving weighting coefficients at the weighting coefficient calculator in FIG. 10.

[FIG. 13] FIG. 13 illustrates a modification example of schematic configuration of the imaging device in FIG. 1.

[FIG. 14] FIG. 14 explains a method for deriving a detection value at the detector of FIG. 13.

[FIG. 15] FIG. 15 illustrates an example schematic configuration of an evaluation value calculator in FIG. 13.

[FIG. 16] FIG. 16 illustrates a modification example of schematic configuration of the imaging device in FIG. 1.

[FIG. 17] FIG. 17 illustrates a modification example of schematic configuration of the imaging device in FIG. 10.

[FIG. 18] FIG. 18 illustrates a modification example of schematic configuration of the imaging device in FIG. 13.

[FIG. 19] FIG. 19 illustrates an example schematic configuration of an imaging device according to a second embodiment of the present disclosure.

[FIG. 20] FIG. 20 illustrates an example schematic configuration of a weighted average processor in FIG. 19.

[FIG. 21] FIG. 21 illustrates an example of AE control at the imaging device in FIG. 19.

[FIG. 22] FIG. 22 illustrates a modification example of schematic configuration of the imaging device in FIG. 19.

[FIG. 23] FIG. 23 illustrates a modification example of schematic configuration of the imaging device in FIG. 19.

[FIG. 24] FIG. 24 is a block diagram depicting an example of schematic configuration of a vehicle control system.

[FIG. 25] FIG. 25 is a diagram of assistance in explaining an example of installation positions of an outside-vehicle information detecting section and an imaging section.

Modes for Carrying Out the Invention

The following describes embodiments of the present disclosure in details with reference to the drawings. The following description is a specific example of the present disclosure, and the present disclosure is not limited to the following embodiments.

<1. First Embodiment>

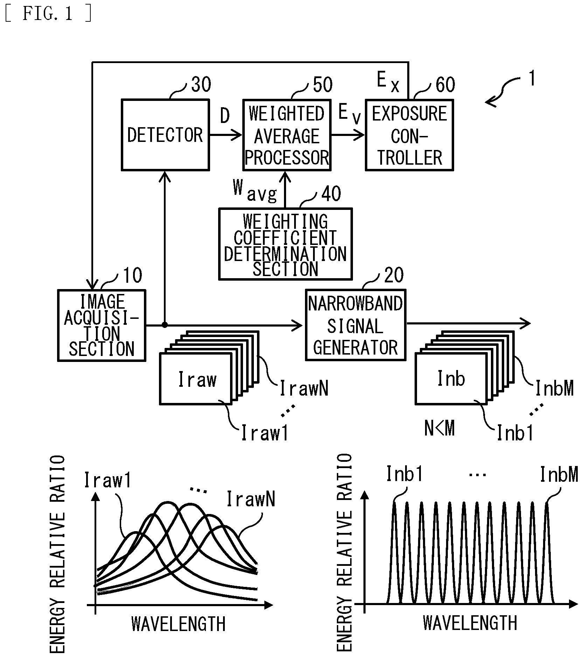

FIG. 1 illustrates an example schematic configuration of an imaging device 1 according to a first embodiment of the present disclosure. For example, as illustrated in FIG. 1, the imaging device 1 includes an image acquisition section 10, a narrowband signal generator 20, a detector 30, a weighting coefficient determination section 40, a weighted average processor 50, and an exposure controller 60. The image acquisition section 10 corresponds to a specific example of a "multispectral sensor section" in the present disclosure. The narrowband signal generator 20 corresponds to a specific example of a "narrowband signal generator" in the present disclosure. A module including the detector 30, the weighted average processor 50, and the exposure controller 60 corresponds to a specific example of a "controller" in the present disclosure. The weighting coefficient determination section 40 corresponds to a specific example of a "weighting coefficient determination section" in the present disclosure.

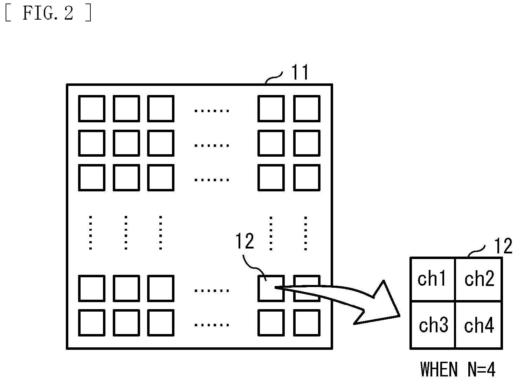

As illustrated in FIG. 2, for example, the image acquisition section 10 includes a pixel array unit 11. The pixel array unit 11 has a plurality of pixels 12 arranged two-dimensionally, and each pixel 12 outputs a pixel signal in accordance with incident light that has entered through a diaphragm and a photographing lens. Each pixel 12 includes a photoelectric conversion element such as a photodiode.

The pixel array unit 11 is a multispectral sensor that outputs a plurality of (N) wavelength signals as pixel signals. The multispectral sensor is a solid-state imaging element such as a charge coupled device (CCD) or a complementary metal oxide semiconductor (CMOS). The multispectral sensor outputs a plurality of wavelength signals, which are signals in four or more wavelength bands, such as R (red), G (green), B (blue), Y (yellow), M (magenta), C (cyan), UV (ultraviolet), and NIR (near infrared). The image acquisition section 10 A/D converts pixel signals from the multispectral sensor, and outputs RAW signals $I_{raw}$ based on the pixel signals. The image acquisition section 10 sets the exposure on the basis of an exposure control value Ex input from the exposure controller 60. The image acquisition section 10 sets at least one of the shutter speed, gain and aperture, for example, on the basis of the exposure control value Ex.

The RAW signals $I_{raw}$ include multiple (N) wavelength signals for each pixel 12. FIG. 1 illustrates an example of the RAW signals $I_{raw}$ that include N-channel RAW signals $I_{raw1}, \ldots, I_{rawN}$. FIG. 2 illustrates an example of the configuration of sub-pixels included in each pixel 12 when the number of channels N is four. In FIG. 2, "ch1," "ch2," "ch3," and "ch4" indicate that each pixel 12 includes four channels. It should be noted that the pixel configuration in the pixel array unit 11 is not limited to the above.

The narrowband signal generator 20 performs a matrix operation on the RAW signals $I_{raw}$ using Equation (1) to generate narrowband wavelength signals (narrowband signals $I_{nb}$) each having a finer wavelength resolution than the RAW signals $I_{raw}$. The narrowband signal generator 20 uses the coefficient matrix described in Matrix (2) to generate multiple (M) narrowband signals $I_{nb1}, \ldots, I_{nbt}, \ldots, I_{nbM}$ ($1 \leq t \leq M$) from the multiple RAW signals $I_{raw1}, \ldots, I_{rawk}, \ldots, I_{rawN}$ ($1 \leq k \leq N$) output from the image acquisition section 10, where the narrowband signals are narrower in bandwidth than the wavelength signals output from the image acquisition section 10. FIG. 1 illustrates an example in which narrowband signal $I_{nb}$ includes narrowband signals $I_{nb1}, \ldots, I_{nbM}$ of M channels, which are greater than N channels.

[Mathematical 1]

$$\begin{pmatrix} I_{nb1} \\ \vdots \\ I_{nbM} \end{pmatrix} = \overset{\text{COEFFICIENT MATRIX}}{\begin{pmatrix} C_{1,1} & \cdots & C_{1,N} \\ \vdots & \ddots & \vdots \\ C_{M,1} & \cdots & C_{M,N} \end{pmatrix}} \overset{\text{raw SIGNAL}}{\begin{pmatrix} I_{raw1} \\ \vdots \\ I_{rawN} \end{pmatrix}} \cdots (1)$$

NARROWBAND SIGNAL

[Mathematical 2]

$$\begin{pmatrix} |C_{1,1}| & \cdots & |C_{1,N}| \\ \vdots & \ddots & \vdots \\ |C_{M,1}| & \cdots & |C_{M,N}| \end{pmatrix} \quad \cdots \quad (2)$$

The detector 30 has a detection circuit that generates a plurality of detection values (detection values D) on the basis of the multiple wavelength signals (RAW signals $I_{raw}$). As indicated in Equation (3), the detection values D include detection values $D_1$, $D_2$, . . . , $D_k$, ...,$D_N$ of N channels. The detection values $D_1$, ..., $D_N$ correspond to the RAW signals $I_{raw1}$, ..., $I_{rawN}$, respectively, for each channel k. The detection circuit generates N-channel detection values $D_1$,..., $D_N$ on the basis of the N-channel RAW signals $I_{raw1}$,..., $I_{rawN}$ acquired from the image acquisition section 10. The detection circuit generates a detection value $D_k$ on the basis of the RAW signal $I_{rawk}$. The detector 30 outputs the detection value D, which is generated by the detection circuit, to the weighted average processor 50.

[Mathematical 3]

$$D = \{ D_1, D_2, ...,D_k ... ,D_N \} \quad \cdots \quad (3)$$

The weighting coefficient determination section 40 determines a weighting coefficient $W_{avg}$ corresponding to the detection value D (Equation (4)). As indicated in Equation (4), the weighting coefficient $W_{avg}$ includes N-channel weighting coefficients $w_1^{avg}$, $w_2^{avg}$, ..., $w_k^{avg}$, ..., $w_N^{avg}$. The weighting coefficient determination section 40 determines a plurality of weighting coefficients $w_1^{avg}$, $w_2^{avg}$, ..., $w_k^{avg}$, ..., $w_N^{avg}$, each of which is assigned to a corresponding detection value $D_1$, $D_2$, ..., $D_k$, ..., $D_N$. The weighting coefficient determination section 40 determines a weighting coefficient $W_k^{avg}$ corresponding to the detection value $D_k$. The weighting coefficient determination section 40 derives the weighting coefficient $w_k^{avg}$ using Equations (5) and (6).

[Mathematical 4]

$$W_{avg} = \{ w_1^{avg}, w_2^{avg}, ... ,w_k^{avg}, ... ,w_N^{avg} \} \quad \cdots \quad (4)$$

[Mathematical 5]

$$w_k^{avg} = \left( \Sigma_t \, w_k^t \right) / Z \quad \cdots \quad (5)$$

[Mathematical 6]

$$Z = \Sigma_k \, \Sigma_t \, w_k^t \quad \cdots \quad (6)$$

As indicated in Equations (7) and (8), the weighting coefficient $w_k^t$ for channel k is one element of the weighting coefficient list $W_{\_list}$.

[Mathematical 7]

$$W\_list = \{ w_1, w_2, ..., w_t, ... , w_M \} \quad \cdots \quad (7)$$

[Mathematical 8]

$$W_t = \{ w_1^t, w_2^t, ..., w_k^t, ... ,w_N^t \} \quad \cdots \quad (8)$$

As indicated in Equation (9), the weighting coefficient $w_k^t$ is the absolute value of one element in the coefficient matrix indicated in Matrix (2). Thus, the weighting coefficient list $W_{\_list}$ includes the absolute values of the elements in the coefficient matrix described in Matrix (2). The weighting coefficient determination section 40 determines weighting coefficients $W_{avg}$ (weighting coefficients $w_1^{avg}$, $w_2^{avg}$, ... , $w_k^{avg}$, ... , $w_N^{avg}$ of N channels) on the basis of the elements included in the coefficient matrix indicated in Matrix (2).

[Mathematical 9]

$$w_k^t = |c_{t,k}| \quad \cdots \quad (9)$$

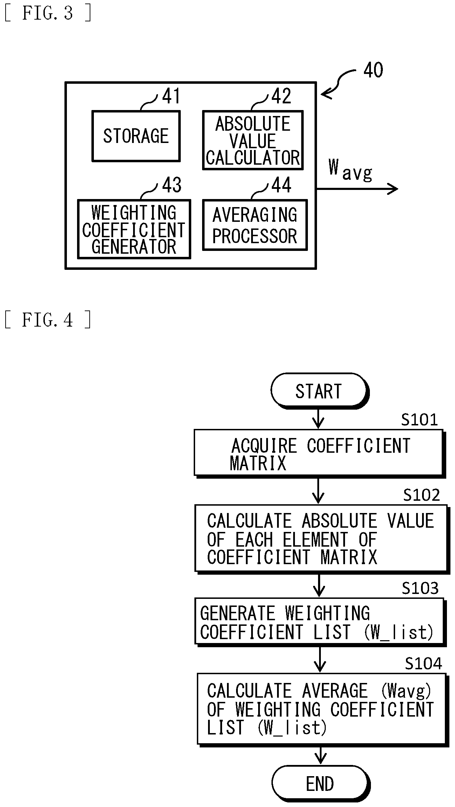

For example, as illustrated in FIG. 3, the weighting coefficient determination section 40 includes a storage 41, an absolute value calculator 42, a weighting coefficient generator 43, and an averaging processor 44.

The storage 41 includes a non-volatile memory (NVM), for example. The storage 41 stores the coefficient matrix indicated in Matrix (2). The absolute value calculator 42 acquires the coefficient matrix from the storage 41 (step S101, FIG. 4). The absolute value calculator 42 uses Equation (9) to calculate the absolute value of each element of the coefficient matrix obtained from the storage 41 (step S102, FIG. 4). The weighting coefficient generator 43 uses the calculated absolute values to generate the weighting coefficient list $W_{\_list}$ indicated in Equation (7) (step S102, FIG. 4). The average processor 44 uses Equations (4) to (6) to calculate the average value (weighting coefficient $W_{avg}$) of the weighting coefficient list $W_{\_list}$. The average processor 44 calculates a weighting coefficient $W_k^{avg}$ for each channel k. The averaging processor 44 outputs the calculated weighting coefficients $W_{avg}$ to the weighted average processor 50.

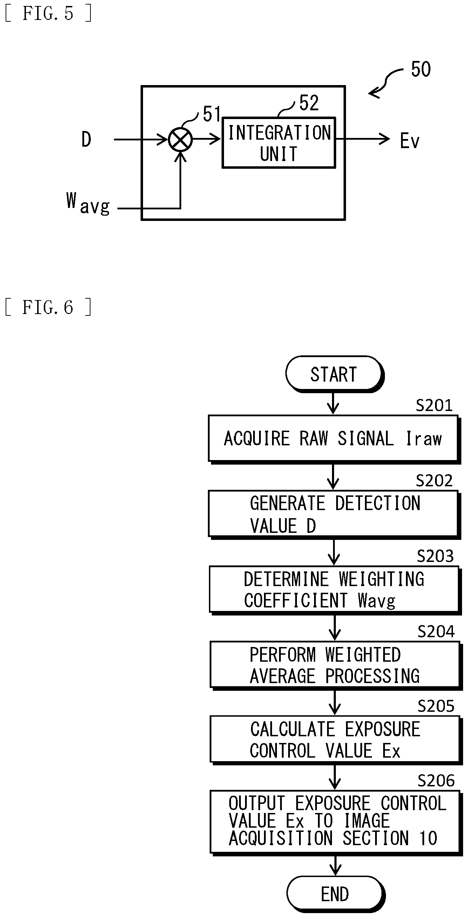

The weighted average processor 50 performs weighted average processing on the detection values D (detection values $D_1$, $D_2$, ... , $D_k$, ... , $D_N$ of N channels) to calculate an evaluation value Ev. The weighting coefficient determination section 50 performs the weighted average processing on the basis of the weighting coefficient $W_{avg}$ determined by the weighting coefficient determination section 40. The weighted average processor 50 performs the weighted average processing on the basis of each element in the coefficient matrix. As illustrated in FIG. 5, for example, the weighted average processor 50 has a multiplication unit 51 and an integration unit 52.

The multiplication unit 51 multiplies the detection value $D_k$ by the weighting coefficient $w_k^{avg}$ for each channel k, and outputs the value obtained by this calculation ($D_k \times w_k^{avg}$) to the integration unit 52. The integration unit 52 integrates the values ($D_k \times w_k^{avg}$) input from the multiplication unit 51 over all channels and outputs the resulting evaluation value Ev to the exposure controller 60.

The exposure controller 60 calculates an exposure control value Ex on the basis of the evaluation value Ev input from the weighted average processor 50. For example, the exposure controller 60 divides the exposure target value by the evaluation value Ev to calculate the exposure value (time), and calculates the exposure control value Ex on the basis of the calculated exposure value (time). The exposure controller 60 outputs the calculated exposure control value Ex to the image acquisition section 10. In this manner, the exposure controller 60 performs exposure control (AE control) of the image acquisition section 10 (multispectral sensor) on the basis of the evaluation value Ev.

[Operation]

Next, the following describes the AE control in the imaging device 1. FIG. 6 illustrates an example of AE control in the imaging device 1.

First, the image acquisition section 10 sets the exposure on the basis of the initial value of the exposure control value Ex and then captures an image. The image acquisition section 10 thereby acquires a RAW signal $I_{raw}$ based on the initial value of the exposure control value Ex (step S201). Next, the detector 30 generates a detection value D on the basis of the RAW signal $I_{raw}$ (step S202). Next, the weighting coefficient determination section 40 determines the weighting coefficient $W_{avg}$ corresponding to the detection value D (step S203). Next, the weighted average processor 50 performs weighted average processing on the detection value D (step S204). In this way, the weighted average processor 50 obtains the evaluation value Ev. Next, the exposure controller 60 calculates the exposure control value Ex on the basis of the evaluation value Ev (step S205). The exposure controller 60 outputs the calculated exposure control value Ex to the image acquisition section 10. As a result, the image acquisition section 10 is able to set the exposure on the basis of the received new exposure control value Ex and then capture an image.

[Effects]

Next, the following describes the effects of the imaging device 1.

Imaging devices enabling multispectral photography have been developed (see Patent Literatures 1 to 3, for example). Multispectral photography makes it possible to obtain a multispectral image using more wavelength bands in a single shot, than in photography with an RGB sensor that uses red (R), green (G), and blue (B) as the wavelengths for photography. Generally, a single wavelength band is used in AE control. However, for exposure control using only a single wavelength band, it is difficult to capture an image of a desired subject out of a plurality of subjects with large differences in illuminance, for example, with appropriate exposure.

In contrast, this embodiment performs weighted average processing on the detection values D generated using multiple wavelength signals, which are pixel signals output from the image acquisition section 10, thus calculating the evaluation value Ev. The present embodiment then performs exposure control of the image acquisition section 10 on the basis of the calculated evaluation value Ev. In this way, the present embodiment performs weighted average processing on the detection values D, which makes it possible to determine which channel of the image acquisition section 10 is to be given importance. As a result, the present embodiment is able to effectively suppress degradation in the output narrowband signals $I_{nb}$ (overexposure or underexposure of an image). The present embodiment therefore enables appropriate exposure to suppress overexposure or underexposure of an image.

The present embodiment further performs weighted average processing on the basis of each element included in the coefficient matrix. This makes it possible to determine which channel of the image acquisition section 10 is to be given importance. As a result, the present embodiment is able to effectively suppress degradation in the output narrowband signal $I_{nb}$ (overexposure or underexposure of an image). The present embodiment therefore enables appropriate exposure to suppress overexposure or underexposure of an image.

The present embodiment further performs weighted average processing on the basis of the weighting coefficient $W_{avg}$ determined by the weighting coefficient determination section 40. This makes it possible to determine which channel of the image acquisition section 10 is to be given importance. As a result, the present embodiment is able to effectively suppress degradation in the output narrowband signals $I_{nb}$ (overexposure or underexposure of an image). The present embodiment therefore enables appropriate exposure to suppress overexposure or underexposure of an image.

The present embodiment further determines the weighting coefficient $W_{avg}$ on the basis of each element included in the coefficient matrix. This makes it possible to determine which channel of the image acquisition section 10 is to be given importance. As a result, the present embodiment is able to effectively suppress degradation in the output narrowband signals $I_{nb}$ (overexposure or underexposure of an image). The present embodiment therefore enables appropriate exposure to suppress overexposure or underexposure of an image.

<2. Modification Examples of First Embodiment>

[Modification Example 1-1]

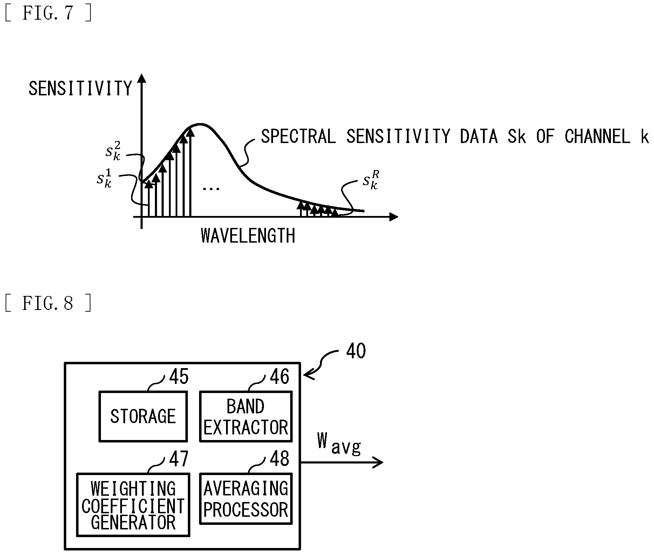

In the above embodiment, the weighting coefficient determination section 40 may determine the weighting coefficient $W_{avg}$ on the basis of the spectral sensitivity characteristics of the image acquisition section 10 (multispectral sensor). In this case, the weighted average processor 50 is allowed to perform the weighted average processing on the basis of the spectral sensitivity characteristic (spectral sensitivity data $S_k$) for each channel k as illustrated in FIG. 7, for example.

The spectral sensitivity data $S_k$ of the channel k is quantized into R pieces of data as indicated in Equation (10). Furthermore, the spectral sensitivity data $S'_k$ corresponding to each band of the narrowband signal $I_{nb}$, which is extracted from the spectral sensitivity data $S_k$ of channel k, includes $S'_k1, S'_k^2, ..., S'_k^t, ..., S'_k^M$, as indicated in Equation (11). In this modification example, the weighting coefficient $w_k^t$ for channel k is $S'_k^t$, as indicated in Equation (12). Therefore, the weighting coefficient list $W_{\_list}$ in this modification example includes the spectral sensitivity data $S'_k^t$ that corresponds to each band of the narrowband signal $I_{nb}$, which is extracted from the spectral sensitivity data $S_k$ of each channel k. The weighting coefficient determination section 40 determines the weighting coefficients $W_{avg}$ (weighting coefficients $w_1^{avg}$, $w_2^{avg}, ..., w_k^{avg}, ..., w_N^{avg}$ of N channels) on the basis of data $S'_k^t$ corresponding to each band of the narrowband signal $I_{nb}$, which is extracted from the spectral sensitivity data $S_k$ of each channel k.

[Mathematical 10]

$$S_k = \{ S_k^1, S_k^2, ..., S_k^R \} \quad \cdots \quad (10)$$

[Mathematical 11]

$$S'_k = \{ S'^1_k, S'^2_k, ..., S'^t_k, ..., S'^M_k \} \quad \cdots \quad (11)$$

[Mathematical 12]

$$W_k^t = S'^{\,t}_k \quad \cdots \ (12)$$

For example, as illustrated in FIG. 8, the weighting coefficient determination section 40 includes a storage 45, a band extractor 46, a weighting coefficient generator 47, and an averaging processor 48.

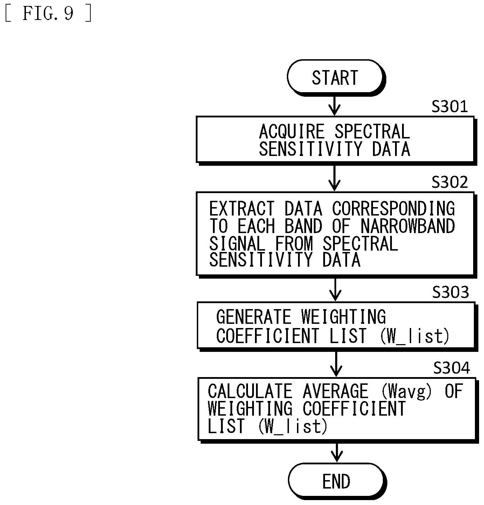

The storage 45 includes a non-volatile memory, for example. The storage 45 stores the spectral sensitivity data $S_k$ for each channel k indicated in Equation (10). The band extractor 46 acquires the spectral sensitivity data $S_k$ from the storage 45 (step S301, FIG. 9). The band extractor 46 extracts the spectral sensitivity data $S'_k$ corresponding to each band of the narrowband signal $I_{nb}$ from the spectral sensitivity data $S_k$ obtained from the storage 45 (step S302, FIG. 9). The weighting coefficient generator 47 uses the extracted spectral sensitivity data $S'_k$ to generate the weighting coefficient list $W_{\_list}$ (step S303, FIG. 9). The average processor 48 uses Equations (4) to (6) to calculate the average value (weighting coefficient $W_{avg}$) of the weighting coefficient list $W_{\_list}$ (step S304, FIG. 9). The average processor 48 calculates the weighting coefficient $W_k{}^{avg}$ for each channel k. The averaging processor 48 outputs the calculated weighting coefficients $W_{avg}$ to the weighted average processor 50.

This modification example performs weighted average processing on the basis of the spectral sensitivity characteristic (spectral sensitivity data $S_k$) for each channel k. This makes it possible to determine which channel of the image acquisition section 10 is to be given importance. As a result, this example is able to effectively suppress degradation in the output plurality of narrowband signals $I_{nb}$ (overexposure or underexposure of an image). This modification example therefore enables appropriate exposure to suppress overexposure or underexposure of an image.

This modification example further determines the weighting coefficient $W_{avg}$ on the basis of the spectral sensitivity characteristic (spectral sensitivity data $S_k$) for each channel k. This makes it possible to determine which channel of the image acquisition section 10 is to be given importance. As a result, this example is able to effectively suppress degradation in the output multiple narrowband signals $I_{nb}$ (overexposure or underexposure of an image). This modification example therefore enables appropriate exposure to suppress overexposure or underexposure of an image.

[Modification Example 1-2]

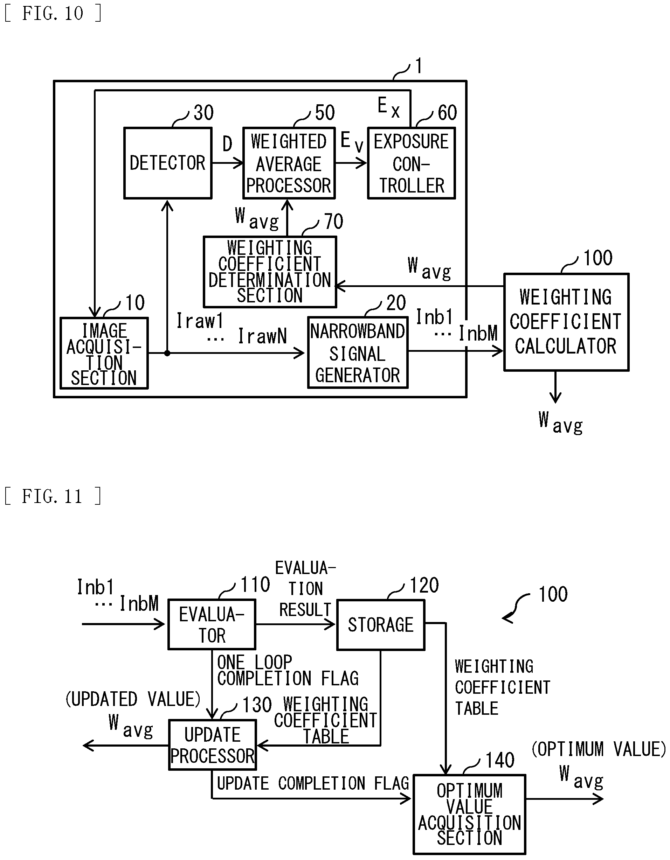

The above embodiment may include, instead of the weighting coefficient determination section 40, a weighting coefficient determination section 70 that determines a value obtained from a weighting coefficient calculator 100 connected to the imaging device 1 as the weighting coefficient $W_{avg}$, as indicated in FIG. 10, for example.

The weighting coefficient calculator 100 is configured to include a learning model that is trained to, when receiving the input of the narrowband signals $I_{nb1}$, ..., $I_{nbt}$, ..., $I_{nbM}$, output weighting coefficients $W_{avg}$ suitable for the input narrowband signals $I_{nb1}$, ..., $I_{nbt}$, ..., $I_{nbM}$. The weighting coefficient calculator 100 includes an evaluator 110, a storage 120, an update processor 130, and an optimum value acquisition section 140, as illustrated in FIG. 11, for example.

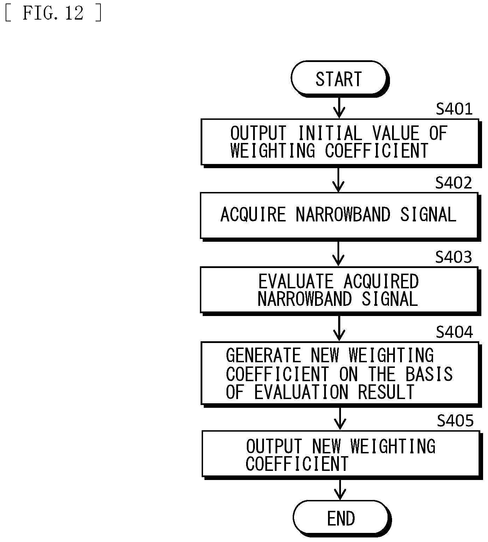

The storage 120 stores the initial value of the weighting coefficient $W_{avg}$. The update processor 130 first reads out the initial value of the weighting coefficient $W_{avg}$ from the storage 120, and outputs it to the imaging device 1 (step S401, FIG. 12). The imaging device 1 uses the weighting coefficient $W_{avg}$ input from the weighting coefficient calculator 100 to calculate an exposure control value Ex, and sets the exposure on the basis of the calculated exposure control value Ex. The imaging device 1 sets the exposure on the basis of the exposure control value Ex, and then captures an image. As a result, the imaging device 1 outputs a narrowband signal $I_{nb}$ based on the initial value of the weighting coefficient $W_{avg}$.

The evaluator 110 acquires the narrowband signal $I_{nd}$ from the imaging device 1 (step S402, FIG. 12). In response to the acquisition of the narrowband signal $I_{nd}$ from the narrowband signal generator 20, the evaluator 110 evaluates the acquired narrowband signal $I_{nb}$ (step S403, FIG. 12). The evaluator 110 generates a new weighting coefficient $W_{avg}$ on the basis of the evaluation result of the acquired narrowband signal $I_{nb}$ (step S404, FIG. 12). The evaluator 110 associates the evaluation result and the weighting coefficient $W_{avg}$ with each other and stores them in the storage 120. The evaluator 110 outputs a flag indicating the completion of the evaluation (one loop completion flag) to the update processor 130. In response to the acquisition of the flag indicating the completion of the evaluation (one loop completion flag) from the evaluator 110, the update processor 130 reads out the evaluation result and the weighting coefficient $W_{avg}$ from the storage 120 and outputs the new weighting coefficient $W_{avg}$ to the imaging device 1 (step S405, FIG. 12).

The evaluator 110, storage 120, and update processor 130 perform the above processing every time the narrowband signal $I_{nb}$ is input from the narrowband signal generator 20. When the values of the weighting coefficient $W_{avg}$ converge, the updating processor 130 generates a flag indicating the convergence (update completion flag) and outputs it to the optimum value acquisition section 140. When receiving the flag from the update processor 130, the optimum value acquisition section 140 reads the weighting coefficient $W_{avg}$ from the storage 120, and outputs the read weighting coefficient $W_{avg}$ to the outside.

This modification example determines a value generated by a learning model in the weighting coefficient calculator 100 as the weighting coefficient $W_{avg}$. This makes it possible to determine which channel of the image acquisition section 10 is to be given importance. As a result, this modification example is able to effectively suppress degradation in the output narrowband signal $I_{nb}$ (overexposure or underexposure of an image). This modification example therefore enables appropriate exposure to suppress overexposure or underexposure of an image.

[Modification Example 1-3]

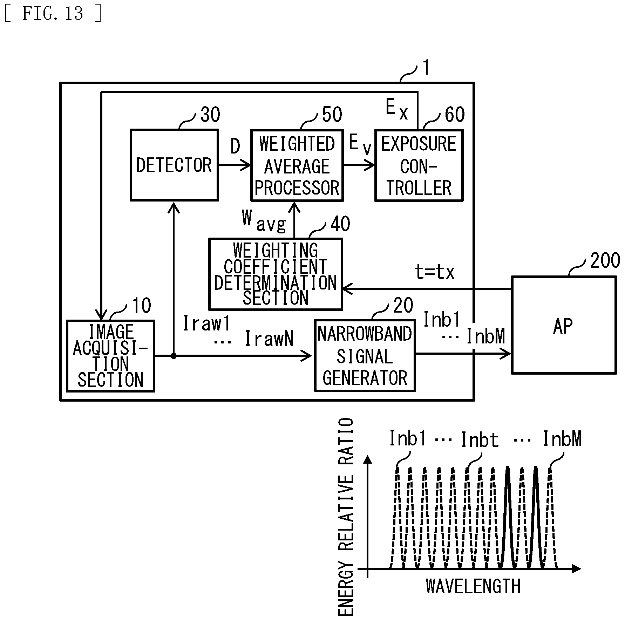

In the above embodiment, the weighting coefficient determination section 40 may determine the weighting coefficient $W_{avg}$ on the basis of each element in the coefficient matrix and designation information input from an application device 200 connected to the imaging device 1, as illustrated in FIG. 13, for example. In this case, the weighted average processor 50 is able to perform weighted average processing on the basis of each element in the coefficient matrix and the designation information input from the application device 200 connected to the imaging device 1.

This "designation information" designates at least one of a plurality of bands included in the narrowband signals $I_{nb}$. FIG. 13 illustrates the two bands designated by the "designation information" with thick solid lines. Transmitting the "designation information" from the application device 200 to the imaging device 1 allows the imaging device 1 to generate a weighting coefficient $W_{avg}$ that is able to suppress degradation in the band where degradation (overexposure or underexposure of an image) is particularly to be suppressed. As a result, this modification example is able to effectively suppress degradation (overexposure or underexposure of an image) in the specific band.

The narrowband signal generator 20 may output M narrowband signals $I_{nb1}$, ..., $I_{nbt}$, ..., $I_{nbM}$ to the application device 200 as the narrowband signals $I_{nb}$, or may output only one or more narrowband signals $I_{nbt}$ designated by the "designation information" to the application device 200. When the narrowband signal generator 20 outputs only one or more narrowband signals $I_{nbt}$ designated by the "designation information" to the application device 200, this allows the amount of data transmitted from the imaging device 1 to the application device 200 to be kept low.

[Modification Example 1-4]

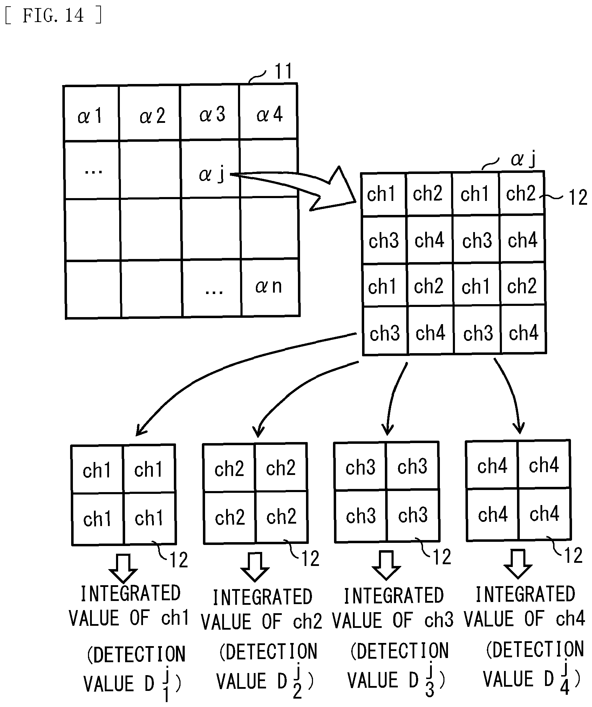

In the above embodiment and modification examples 1-1, 1-2, and 1-3, the weighting coefficient determination section 40 may determine the weighting coefficient $W_{avg}$ for each divided region $\alpha j$ (FIG. 14) obtained by dividing the pixel region of the pixel array unit 11, for example. In this case, a plurality of pixels 12 is assigned to each channel k in the divided region $\alpha j$.

The detector 30 classifies the multiple pixel signals output from the pixel array unit 11 (multispectral sensor) according to the divided regions $\alpha j$ and integrates the multiple pixel signals for each channel k in each divided region $\alpha j$. This allows the detection circuit to generate a detection value $D_k^j$ for each channel k and for each divided region $\alpha j$, as indicated in Equations (3) and (13).

[Mathematical 13]

$$D_k = \{ D_k^1, D_k^2, ..., D_k^j, ..., D_k^X \} \quad \cdots \ (13)$$

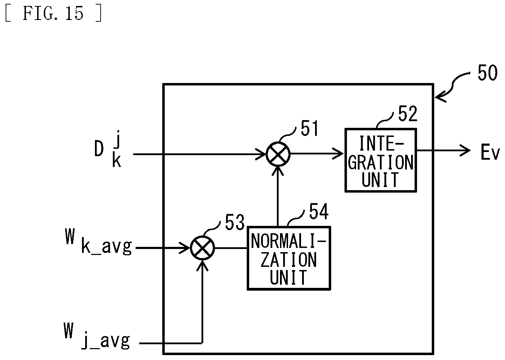

The weighted average processor 50 performs weighted average processing on the detection values $D_k^j$ that is generated for each channel k and for each divided region $\alpha j$, thus calculating an evaluation value Ev. As illustrated in FIG. 15, for example, the weighted average processor 50 has multiplication units 51 and 53, an integration unit 52, and a normalization unit 54.

The multiplication unit 53 multiplies the weighting coefficient $W_{k\_avg}$ for each channel k by the weighting coefficient $W_{j\_avg}$ for each divided region $\alpha j$. The normalization unit 54 normalizes the values ($W_{k\_avg} \times W_{j\_avg}$) obtained by the multiplication unit 53. The value obtained by normalization in the normalization unit 54 is $w_k^{avg}$. The multiplication unit 51 multiplies the detection value $D_k$ and the value $w_k^{avg}$ obtained by normalization in the normalization unit 54 for each channel, and outputs the resulting value ($D_k \times w_k^{avg}$) to the integration unit 52. The integration unit 52 integrates the values ($D_k \times w_k^{avg}$) input from the multiplication unit 51 over all channels and outputs the resulting evaluation value Ev to the exposure controller 60.

In this way, this modification example determines the weighting coefficient $W_{avg}$ for each divided region $\alpha j$. This makes it possible to assign a large weighting coefficient to a region of interest in the pixel region and to assign a smaller weighting coefficient farther away from the region of interest, for example. This makes it possible to effectively suppress degradation (overexposure or underexposure of an image) in the region of interest.

Next, the following describes an embodiment different from the above embodiment. In the following description, like reference numerals indicate like parts having the same configurations in the above embodiment. In the following description, effects common to the above embodiment will be omitted as appropriate.

[Modification Example 1-5]

In the above embodiment and modification examples 1-1, 1-2, 1-3, and 1-4, the detector 30 may generate detection values in number Q that is different from the number N of channels. In this case, the weighting coefficient determination section 40 determines Q weighting coefficients corresponding to Q detection values. Such an example also leads to the same effects as those described in the above embodiment and modification examples 1-1, 1-2, 1-3, and 1-4.

[Modification Example 1-6]

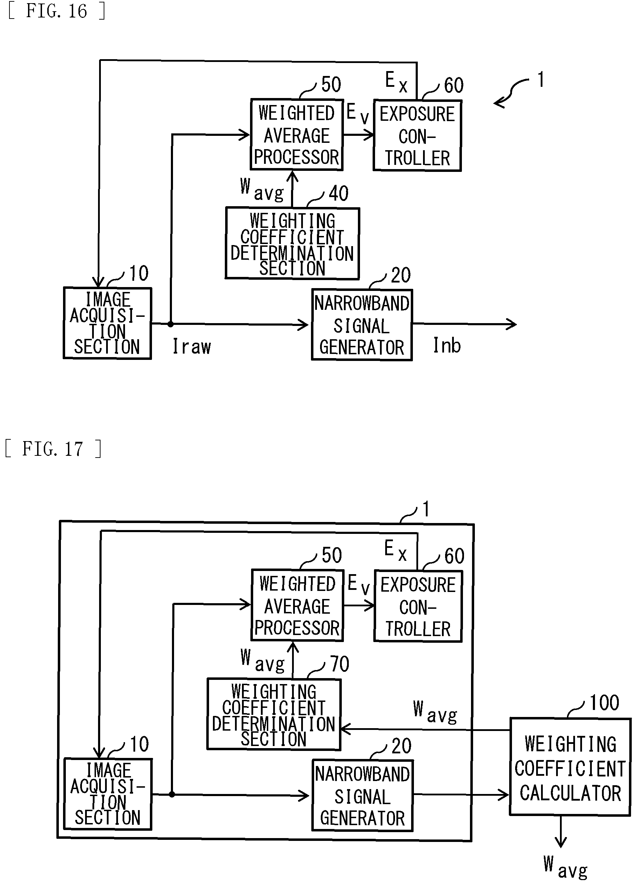

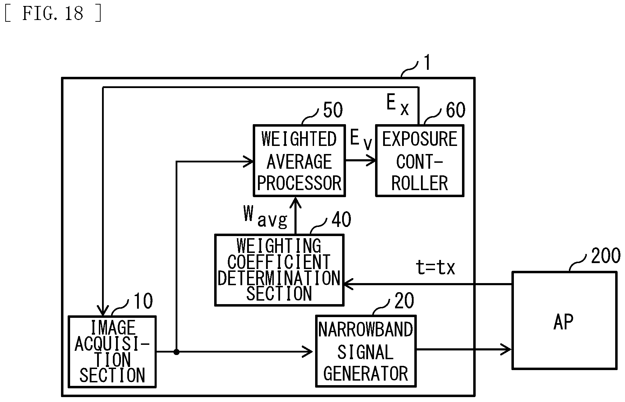

In the above embodiment and modification examples 1-1, 1-2, 1-3, and 1-4, the detector 30 may be omitted. For example, as illustrated in FIGs. 16, 17 and 18, the detector 30 may be omitted, and instead of the detection value D, the output of the image acquisition section 10 (RAW signal $I_{raw}$) may be input to the weighted average processor 50. In this case, the weighting coefficient determination section 40 determines a weighting coefficient $W_{avg}$ corresponding to the RAW signal $I_{raw}$ (Equation (4)). The weighting coefficient determination section 40 determines multiple weighting coefficients $w_1^{avg}$, $w_2^{avg}$, ..., $w_k^{avg}$, ..., $w_N^{avg}$, each of which is assigned to a corresponding RAW signal $I_{raw1}$,...,$I_{rawk}$,...,$I_{rawN}$. The weighting coefficient determination section 40 determines a weighting coefficient $W_k^{avg}$ corresponding to the RAW signal $w_k^{avg}$. The weighted average processor 50 performs weighted average processing on the RAW signal $I_{raw}$ to calculate an evaluation value Ev. The weighting coefficient determination section 50 performs weighted average processing on the basis of the weighting coefficient $W_{avg}$ determined by the weighting coefficient determination section 40. Such an example also leads to the same effects as those described in the above embodiment and modification examples 1-1, 1-2, 1-3, and 1-4.

<3. Second Embodiment>

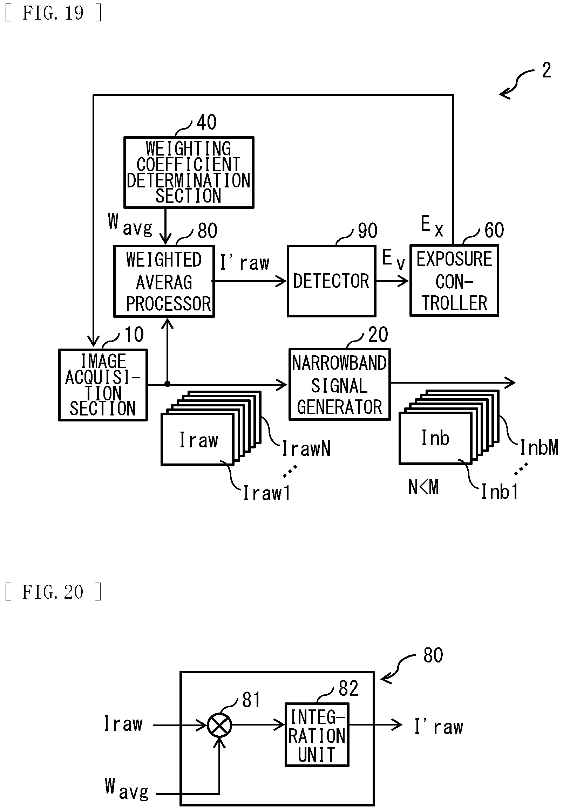

FIG. 19 illustrates an example schematic configuration of an imaging device 2 according to a second embodiment of the present disclosure. For example, as illustrated in FIG. 19, the imaging device 2 includes an image acquisition section 10, a narrowband signal generator 20, a weighting coefficient determination section 40, a weighted average processor 80, a detector 90, and an exposure controller 60. The image acquisition section 10 corresponds to a specific example of a "multispectral sensor section" in the present disclosure. The narrowband signal generator 20 corresponds to a specific example of a "narrowband signal generator" in the present disclosure. A module including the weighted average processor 80, the detector 90 and the exposure controller 60 corresponds to a specific example of a "controller" in the present disclosure. The weighting coefficient determination section 40 corresponds to a specific example of a "weighting coefficient determination section" in the present disclosure.

The weighted average processor 80 performs weighted average processing on the RAW signals $I_{raw}$ (RAW signals $I_{raw1}$,...,$I_{rawN}$ of N channels) to calculate a RAW signal $I'_{raw}$. The weighted average processor 80 performs weighted average processing on the basis of each element in the coefficient matrix. As illustrated in FIG. 20, for example, the weighted average processor 80 has a multiplication unit 81 and an integration unit 82. The multiplication unit 81 multiplies the RAW signal $I_{rawk}$ by the weighting coefficient $w_k^{avg}$ for each channel k, and outputs the value obtained by this calculation ($I_{rawk} \times w_k^{avg}$) to the integration unit 82. The integration unit 82 integrates the values ($I_{rawk} \times w_k^{avg}$) input from the multiplication unit 81 over all channels and outputs a RAW signal $I'_{raw}$ for one channel that is the value obtained by this calculation to the detector 90.

The detector 90 has a detection circuit that generates p (p≥1) detection values on the basis of the RAW signal $I'_{raw}$. The detector 90 calculates an evaluation value Ev on the basis of the p detection values generated by the detection circuit. An evaluation value calculator 83 outputs the calculated evaluation value Ev to the exposure controller 60.

[Operation]

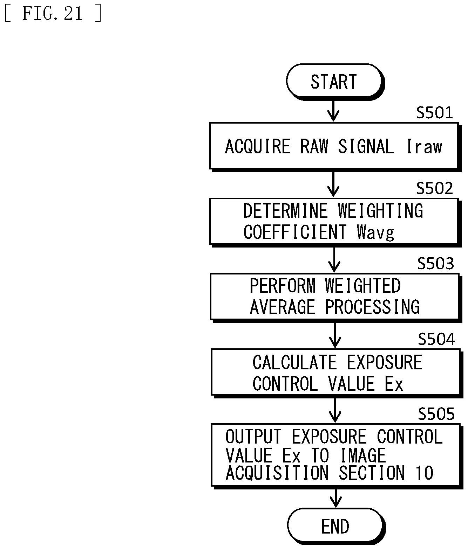

Next, the following describes the AE control in the imaging device 2. FIG. 21 illustrates an example of AE control in the imaging device 2.

First, the image acquisition section 10 sets the exposure on the basis of the initial value of the exposure control value Ex and then captures an image. The image acquisition section 10 thereby acquires a RAW signal $I_{raw}$ based on the initial value of the exposure control value Ex (step S501). Next, the weighting coefficient determination section 40 determines the weighting coefficient $W_{avg}$ corresponding to each channel k (step S502). Next, the weighted average processor 80 performs weighted average processing on the RAW signals $I_{rawk}$ of N channels (step S503). In this way, the weighted average processor 80 obtains the RAW signal $I'_{raw}$ of one channel. Next, the detector 90 generates a detection value D for one channel on the basis of the RAW signal $I'_{raw}$ and calculates an evaluation value Ev on the basis of the generated detection value D. Next, the exposure controller 60 calculates the exposure control value Ex on the basis of the evaluation value Ev (step S504). The exposure controller 60 outputs the calculated exposure control value Ex to the image acquisition section 10. As a result, the image acquisition section 10 is able to set the exposure on the basis of the input new exposure control value Ex and then capture an image.

[Effects]

Next, the following describes the effects of the imaging device 2.

This embodiment performs weighted averaging on the RAW signal $I_{raw}$ obtained from the image acquisition section 10, thus calculating the RAW signal $I'_{raw}$ and calculating the evaluation value Ev on the basis of the calculated RAW signal $I'_{raw}$. The present embodiment then performs exposure control of the image acquisition section 10 on the basis of the calculated evaluation value Ev. In this way, the present embodiment performs weighted average processing on the RAW signal $I_{raw}$, which makes it possible to determine which channel of the image acquisition section 10 is to be given importance. As a result, this embodiment is able to effectively suppress degradation in the output narrowband signal $I_{nb}$ (overexposure or underexposure of an image). The present embodiment therefore enables appropriate exposure to suppress overexposure or underexposure of an image.

<4. Modification Examples of Second Embodiment>

[Modification Example 2-1]

In the above second embodiment, the weighting coefficient determination section 40 may determine the weighting coefficient $W_{avg}$ on the basis of the spectral sensitivity characteristics of the image acquisition section 10 (multispectral sensor). In this case, the evaluation value calculator 50 may perform the weighted average processing on the basis of the spectral sensitivity characteristic (spectral sensitivity data $S_k$) for each channel k as illustrated in FIG. 7, for example. For example, as illustrated in FIG. 8, the weighting coefficient determination section 40 includes a storage 45, a band extractor 46, a weighting coefficient generator 47, and an averaging processor 48.

This modification example performs weighted average processing on the basis of the spectral sensitivity characteristic (spectral sensitivity data $S_k$) for each channel k. This makes it possible to determine which channel of the image acquisition section 10 is to be given importance. As a result, this example is able to effectively suppress degradation in the output multiple narrowband signals $I_{nb}$ (overexposure or underexposure of an image). This modification example therefore enables appropriate exposure to suppress overexposure or underexposure of an image.

This modification example further determines the weighting coefficient $W_{avg}$ on the basis of the spectral sensitivity characteristic (spectral sensitivity data $S_k$) for each channel k. This makes it possible to determine which channel of the image acquisition section 10 is to be given importance. As a result, this example is able to effectively suppress degradation in the output multiple narrowband signals $I_{nb}$ (overexposure or underexposure of an image). This modification example therefore enables appropriate exposure to suppress overexposure or underexposure of an image.

[Modification Example 2-2]

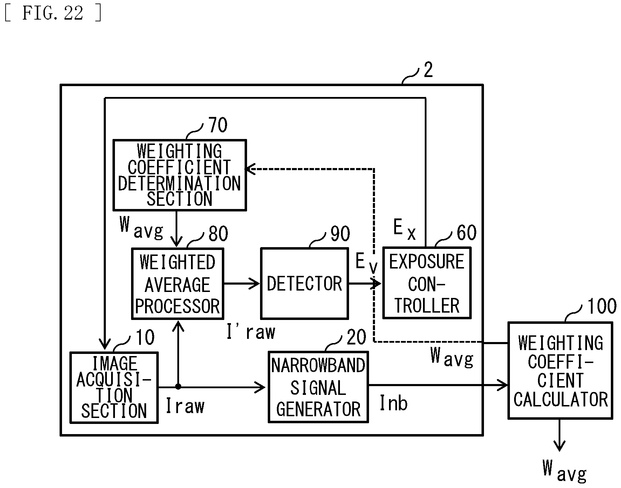

The above second embodiment may include, instead of the weighting coefficient determination section 40, a weighting coefficient determination section 70 that determines a value obtained from a weighting coefficient calculator 100 connected to the imaging device 2 as the weighting coefficient $W_{avg}$, as indicated in FIG. 22, for example.

This modification example determines a value generated by a learning model in the weighting coefficient calculator 100 as the weighting coefficient $W_{avg}$. This makes it possible to determine which channel of the image acquisition section 10 is to be given importance. As a result, this example is able to effectively suppress degradation in the output multiple narrowband signals $I_{nb}$ (overexposure or underexposure of an image). This modification example therefore enables appropriate exposure to suppress overexposure or underexposure of an image.

[Modification Example 2-3]

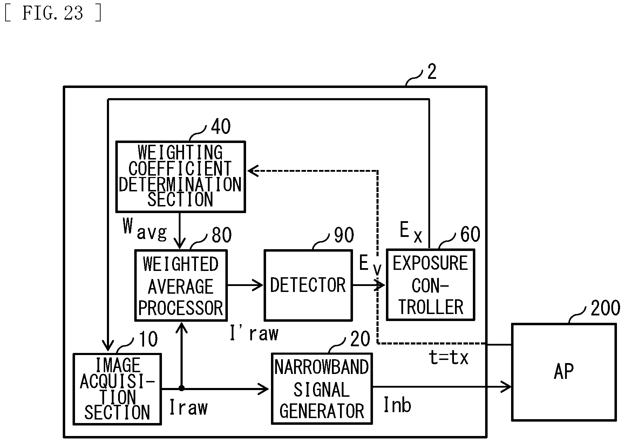

In the above second embodiment, the weighting coefficient determination section 40 may determine the weighting coefficient $W_{avg}$ on the basis of each element in the coefficient matrix and designation information input from an application device 200 connected to the imaging device 2, as illustrated in FIG. 23, for example. In this case, the weighted average processor 80 may perform the weighted average processing on the basis of each element in the coefficient matrix and the designation information input from the application device 200 connected to the imaging device 2.

This "designation information" designates at least one of a plurality of bands included in the narrowband signals $I_{nd}$. Transmitting the "designation information" from the application device 200 to the imaging device 2 allows the imaging device 2 to generate a weighting coefficient $W_{avg}$ that is able to suppress degradation in the band where degradation (overexposure or underexposure of an image) is particularly to be suppressed. As a result, this modification example is able to effectively suppress degradation (overexposure or underexposure of an image) in the specific band.

<5. Modification examples common to each embodiment>

**In** the first and second embodiments and their modification examples, the exposure controller 60 may calculate the exposure control value Ex on the basis of the evaluation value Ev input from the weighted average processor 50 and the information input from an application device connected to the imaging device 1. The application device performs processing using the multiple narrowband signals $I_{nb}$ output from the imaging device 1.

The input information from the application device may include maximum exposure time determined on the basis of the system hardware constraints, or maximum gain determined on the basis of the use of sensor. Calculating the exposure control value Ex on the basis of such known information makes it possible to shorten the exposure time when the score is low in a scene where blur is likely to occur, or to reduce the gain when the score is low in a scene where noise is likely to occur, for example.

The information input from the application device includes an evaluation value. The evaluation value includes the result of the recognition process and the result of the S/N. The result of the recognition process includes information regarding whether a particular object has been detected, the class of the detected object, or a setting value according to the velocity vector of a moving object. The exposure control value Ex is calculated on the basis of the result of such recognition processing, which makes it possible to shorten the exposure time when a specific object is detected in a scene where blur is likely to occur, or to shorten the exposure time when the object's movement speed exceeds a predetermined threshold in a scene where blur is likely to occur. The exposure control value Ex is calculated on the basis of the result of S/N, which makes it possible to reduce the gain when the S/N exceeds a predetermined threshold, for example.

<3. Examples of applications to moving objects>

The technique according to the present disclosure (this technique) is applicable to a variety of products. For example, the technique of the present disclosure may be embodied in the form of an apparatus mounted on any type of moving object, such as an automobile, an electric vehicle, a hybrid electric vehicle, a motorcycle, a bicycle, personal mobility, an airplane, a drone, a ship, or a robot.

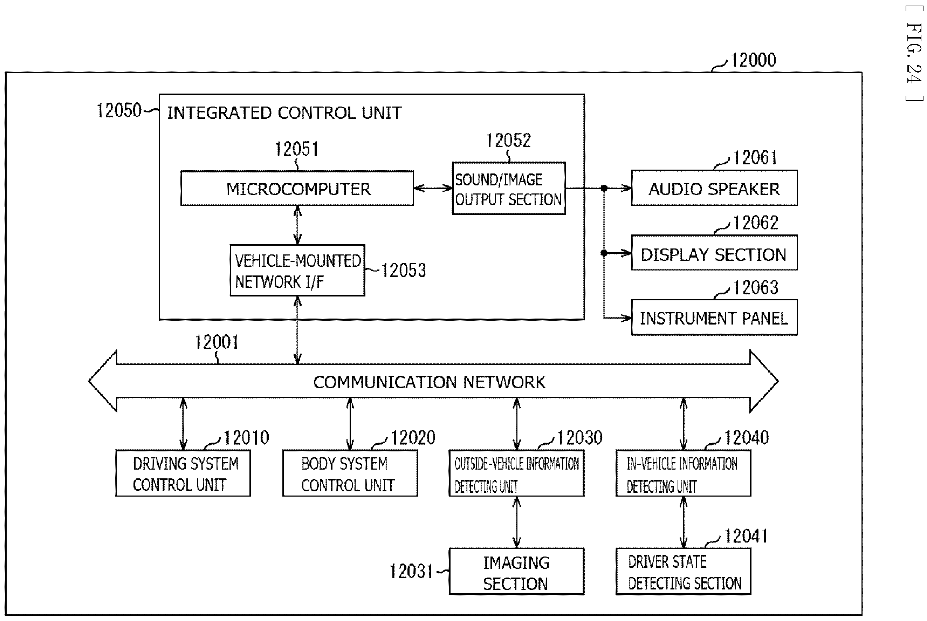

FIG. 24 is a block diagram depicting an example of schematic configuration of a vehicle control system as an example of a mobile body control system to which the technology according to an embodiment of the present disclosure can be applied.

The vehicle control system 12000 includes a plurality of electronic control units connected to each other via a communication network 12001. In the example depicted in FIG. 24, the vehicle control system 12000 includes a driving system control unit 12010, a body system control unit 12020, an outside-vehicle information detecting unit 12030, an in-vehicle information detecting unit 12040, and an integrated control unit 12050. In addition, a microcomputer 12051, a sound/image output section 12052, and a vehicle-mounted network interface (I/F) 12053 are illustrated as a functional configuration of the integrated control unit 12050.

The driving system control unit 12010 controls the operation of devices related to the driving system of the vehicle in accordance with various kinds of programs. For example, the driving system control unit 12010 functions as a control device for a driving force generating device for generating the driving force of the vehicle, such as an internal combustion engine, a driving motor, or the like, a driving force transmitting mechanism for transmitting the driving force to wheels, a steering mechanism for adjusting the steering angle of the vehicle, a braking device for generating the braking force of the vehicle, and the like.

The body system control unit 12020 controls the operation of various kinds of devices provided to a vehicle body in accordance with various kinds of programs. For example, the body system control unit 12020 functions as a control device for a keyless entry system, a smart key system, a power window device, or various kinds of lamps such as a headlamp, a backup lamp, a brake lamp, a turn signal, a fog lamp, or the like. In this case, radio waves transmitted from a mobile device as an alternative to a key or signals of various kinds of switches can be input to the body system control unit 12020. The body system control unit 12020 receives these input radio waves or signals, and controls a door lock device, the power window device, the lamps, or the like of the vehicle.

The outside-vehicle information detecting unit 12030 detects information about the outside of the vehicle including the vehicle control system 12000. For example, the outside-vehicle information detecting unit 12030 is connected with an imaging section 12031. The outside-vehicle information detecting unit 12030 makes the imaging section 12031 image an image of the outside of the vehicle, and receives the imaged image. On the basis of the received image, the outside-vehicle information detecting unit 12030 may perform processing of detecting an object such as a human, a vehicle, an obstacle, a sign, a character on a road surface, or the like, or processing of detecting a distance thereto.

The imaging section 12031 is an optical sensor that receives light, and which outputs an electric signal corresponding to a received light amount of the light. The imaging section 12031 can output the electric signal as an image, or can output the electric signal as information about a measured distance. In addition, the light received by the imaging section 12031 may be visible light, or may be invisible light such as infrared rays or the like.

The in-vehicle information detecting unit 12040 detects information about the inside of the vehicle. The in-vehicle information detecting unit 12040 is, for example, connected with a driver state detecting section 12041 that detects the state of a driver. The driver state detecting section 12041, for example, includes a camera that images the driver. On the basis of detection information input from the driver state detecting section 12041, the in-vehicle information detecting unit 12040 may calculate a degree of fatigue of the driver or a degree of concentration of the driver, or may determine whether the driver is dozing.

The microcomputer 12051 can calculate a control target value for the driving force generating device, the steering mechanism, or the braking device on the basis of the information about the inside or outside of the vehicle which information is obtained by the outside-vehicle information detecting unit 12030 or the in-vehicle information detecting unit 12040, and output a control command to the driving system control unit 12010. For example, the microcomputer 12051 can perform cooperative control intended to implement functions of an advanced driver assistance system (ADAS) which functions include collision avoidance or shock mitigation for the vehicle, following driving based on a following distance, vehicle speed maintaining driving, a warning of collision of the vehicle, a warning of deviation of the vehicle from a lane, or the like.

In addition, the microcomputer 12051 can perform cooperative control intended for automated driving, which makes the vehicle to travel automatedly without depending on the operation of the driver, or the like, by controlling the driving force generating device, the steering mechanism, the braking device, or the like on the basis of the information about the outside or inside of the vehicle which information is obtained by the outside-vehicle information detecting unit 12030 or the in-vehicle information detecting unit 12040.

In addition, the microcomputer 12051 can output a control command to the body system control unit 12020 on the basis of the information about the outside of the vehicle which information is obtained by the outside-vehicle information detecting unit 12030. For example, the microcomputer 12051 can perform cooperative control intended to prevent a glare by controlling the headlamp so as to change from a high beam to a low beam, for example, in accordance with the position of a preceding vehicle or an oncoming vehicle detected by the outside-vehicle information detecting unit 12030.

The sound/image output section 12052 transmits an output signal of at least one of a sound and an image to an output device capable of visually or auditorily notifying information to an occupant of the vehicle or the outside of the vehicle. In the example of FIG. 24, an audio speaker 12061, a display section 12062, and an instrument panel 12063 are illustrated as the output device. The display section 12062 may, for example, include at least one of an on-board display and a head-up display.

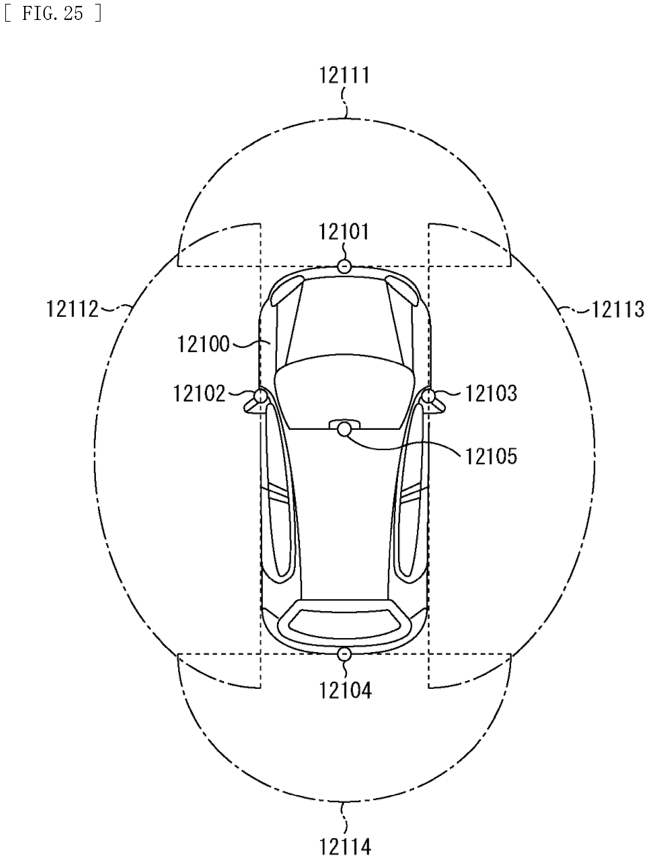

FIG. 25 is a diagram depicting an example of the installation position of the imaging section 12031.

In FIG. 25, the imaging section 12031 includes imaging sections 12101, 12102, 12103, 12104, and 12105.

The imaging sections 12101, 12102, 12103, 12104, and 12105 are, for example, disposed at positions on a front nose, sideview mirrors, a rear bumper, and a back door of the vehicle 12100 as well as a position on an upper portion of a windshield within the interior of the vehicle. The imaging section 12101 provided to the front nose and the imaging section 12105 provided to the upper portion of the windshield within the interior of the vehicle obtain mainly an image of the front of the vehicle 12100. The imaging sections 12102 and 12103 provided to the sideview mirrors obtain mainly an image of the sides of the vehicle 12100. The imaging section 12104 provided to the rear bumper or the back door obtains mainly an image of the rear of the vehicle 12100. The imaging section 12105 provided to the upper portion of the windshield within the interior of the vehicle is used mainly to detect a preceding vehicle, a pedestrian, an obstacle, a signal, a traffic sign, a lane, or the like.

Incidentally, FIG. 25 depicts an example of photographing ranges of the imaging sections 12101 to 12104. An imaging range 12111 represents the imaging range of the imaging section 12101 provided to the front nose. Imaging ranges 12112 and 12113 respectively represent the imaging ranges of the imaging sections 12102 and 12103 provided to the sideview mirrors. An imaging range 12114 represents the imaging range of the imaging section 12104 provided to the rear bumper or the back door. A bird's-eye image of the vehicle 12100 as viewed from above is obtained by superimposing image data imaged by the imaging sections 12101 to 12104, for example.

At least one of the imaging sections 12101 to 12104 may have a function of obtaining distance information. For example, at least one of the imaging sections 12101 to 12104 may be a stereo camera constituted of a plurality of imaging elements, or may be an imaging element having pixels for phase difference detection.

For example, the microcomputer 12051 can determine a distance to each three-dimensional object within the imaging ranges 12111 to 12114 and a temporal change in the distance (relative speed with respect to the vehicle 12100) on the basis of the distance information obtained from the imaging sections 12101 to 12104, and thereby extract, as a preceding vehicle, a nearest three-dimensional object in particular that is present on a traveling path of the vehicle 12100 and which travels in substantially the same direction as the vehicle 12100 at a predetermined speed (for example, equal to or more than 0 km/hour). Further, the microcomputer 12051 can set a following distance to be maintained in front of a preceding vehicle in advance, and perform automatic brake control (including following stop control), automatic acceleration control (including following start control), or the like. It is thus possible to perform cooperative control intended for automated driving that makes the vehicle travel automatedly without depending on the operation of the driver or the like.

For example, the microcomputer 12051 can classify three-dimensional object data on three-dimensional objects into three-dimensional object data of a two-wheeled vehicle, a standard-sized vehicle, a large-sized vehicle, a pedestrian, a utility pole, and other three-dimensional objects on the basis of the distance information obtained from the imaging sections 12101 to 12104, extract the classified three-dimensional object data, and use the extracted three-dimensional object data for automatic avoidance of an obstacle. For example, the microcomputer 12051 identifies obstacles around the vehicle 12100 as obstacles that the driver of the vehicle 12100 can recognize visually and obstacles that are difficult for the driver of the vehicle 12100 to recognize visually. Then, the microcomputer 12051 determines a collision risk indicating a risk of collision with each obstacle. In a situation in which the collision risk is equal to or higher than a set value and there is thus a possibility of collision, the microcomputer 12051 outputs a warning to the driver via the audio speaker 12061 or the display section 12062, and performs forced deceleration or avoidance steering via the driving system control unit 12010. The microcomputer 12051 can thereby assist in driving to avoid collision.

At least one of the imaging sections 12101 to 12104 may be an infrared camera that detects infrared rays. The microcomputer 12051 can, for example, recognize a pedestrian by determining whether or not there is a pedestrian in imaged images of the imaging sections 12101 to 12104. Such recognition of a pedestrian is, for example, performed by a procedure of extracting characteristic points in the imaged images of the imaging sections 12101 to 12104 as infrared cameras and a procedure of determining whether or not it is the pedestrian by performing pattern matching processing on a series of characteristic points representing the contour of the object. When the microcomputer 12051 determines that there is a pedestrian in the imaged images of the imaging sections 12101 to 12104, and thus recognizes the pedestrian, the sound/image output section 12052 controls the display section 12062 so that a square contour line for emphasis is displayed so as to be superimposed on the recognized pedestrian. The sound/image output section 12052 may also control the display section 12062 so that an icon or the like representing the pedestrian is displayed at a desired position.

That is a description on an example of a vehicle control system to which the technique according to the present disclosure is applicable. The technique according to the present disclosure is appliable to the imaging section 12031 of the above described configuration. Applying the technique according to the present disclosure to the imaging section 12031 enables control using multispectral images.

While the present disclosure has been described by way of embodiments and their modification examples, the present disclosure is not limited to the above embodiments and other examples, and numerous modifications are possible. Note that the effects described in this specification are merely examples. The effects of the present disclosure are not limited to those described in the description. The present disclosure may have effects in addition to those described in the description.

Further, the present disclosure may also have the following configuration, for example.

    (1) An imaging device including: a multispectral sensor section that outputs a plurality of (N) wavelength signals as pixel signals;

        a narrowband signal generator that uses a coefficient matrix to generate, from the plurality of wavelength signals output from the multispectral sensor, a plurality of (M: M>N) narrowband signals that are narrower in bandwidth than the wavelength signal; and

        a controller that calculates an evaluation value by performing weighted average processing on the multiple wavelength signals or a plurality detection values generated using the multiple wavelength signals, and performs exposure control of the multispectral sensor section on the basis of the calculated evaluation value.

    (2) The imaging device according to (1), in which the controller performs the weighted average processing on a basis of each element in the coefficient matrix.

    (3) The imaging device according to (1), in which the controller performs the weighted average processing on a basis of spectral sensitivity characteristics of the multispectral sensor section.

    (4) The imaging device according to (1) or (2), in which the controller performs the weighted average processing on a basis of each element in the coefficient matrix and designation information that designates the narrowband signals.

    (5) The imaging device according to any one of (1) to (4), further including a weighting coefficient determination section that determines a plurality of weighting coefficients, each of which is assigned to a corresponding one of the wavelength signals or a corresponding one of the detection values, in which

    the controller performs the weighted average processing on a basis of the plurality of weighting coefficients determined by the weighting coefficient determination section.

    (6) The imaging device according to (5), in which the weighting coefficient determination section determines the plurality of weighting coefficients on a basis of elements included in the coefficient matrix.

(7) The imaging device according to (5), in which the weighting coefficient determination section determines the plurality of weighting coefficients on a basis of spectral sensitivity characteristics of the multispectral sensor section.

(8) The imaging device according to (5), in which the weighting coefficient determination section determines the plurality of weighting coefficients on a basis of elements included in the coefficient matrix and designation information that designates the narrowband signals.

(9) The imaging device according to (5), in which the weighting coefficient determination section determines the plurality of weighting coefficients for each of divided regions obtained by dividing a pixel region of the multispectral sensor section.

(10) The imaging device according to (1), in which the controller calculates the evaluation value by classifying the wavelength signals according to divided regions obtained by dividing a pixel region of the multispectral sensor section, and performing the weighted average processing on the plurality of detection values generated for each of the divided regions.

(11) The imaging device according to any one of (1) to (10), in which the controller performs the exposure control on a basis of the evaluation value and information obtained from a device that performs processing using the plurality of narrowband signals.

(12) A signal processing method including:

generating, from pixel signals that are a plurality of (N) wave signals output from a multispectral sensor, a plurality of (M: M>N) narrowband signals narrower in bandwidth than the wavelength signals using a coefficient matrix; and

calculating an evaluation value by performing weighted average processing on the plurality of wavelength signals or a plurality detection values generated using the plurality of wavelength signals, and performing exposure control of the multispectral sensor section on the basis of the calculated evaluation value.

The imaging device and signal processing method according to one aspect of the present disclosure calculate an evaluation value by performing weighted average processing on a plurality of wavelength signals, which is pixel signals output from the multispectral sensor, or a plurality detection values generated using the plurality of wavelength signals. They then perform exposure control of the multispectral sensor section on the basis of the calculated evaluation value. In this way, they perform weighted average processing on the plurality of wavelength signals or the plurality of detection values, which makes it possible to determine which channel of the multispectral sensor is to be given importance. As a result, they are able to effectively suppress degradation in the output plurality of narrowband signals. The present disclosure therefore enables appropriate exposure to suppress overexposure or underexposure of an image.

The present application claims the benefit of Japanese Priority Patent Application JP2022-073791 filed with the Japan Patent Office on April 27, 2022, the entire contents of which are incorporated herein by reference.

It should be understood by those skilled in the art that various modifications, combinations, sub-combinations and alterations may occur depending on design requirements and other factors insofar as they are within the scope of the appended claims or the equivalents thereof.

## Claims

1.  An imaging device comprising:

    a multispectral sensor section that outputs a plurality of (N) wavelength signals as pixel signals;

    a narrowband signal generator that uses a coefficient matrix to generate, from the plurality of wavelength signals output from the multispectral sensor, a plurality of (M: M>N)) narrowband signals that are narrower in bandwidth than the wavelength signal; and

    a controller that calculates an evaluation value by performing weighted average processing on the multiple wavelength signals or a plurality detection values generated using the multiple wavelength signals, and performs exposure control of the multispectral sensor section on a basis of the calculated evaluation value.

2.  The imaging device according to claim 1, wherein the controller performs the weighted average processing on a basis of each element in the coefficient matrix.

3.  The imaging device according to claim 1, wherein the controller performs the weighted average processing on a basis of spectral sensitivity characteristics of the multispectral sensor section.

4.  The imaging device according to claim 1, wherein the controller performs the weighted average processing on a basis of each element in the coefficient matrix and designation information that designates the narrowband signals.

5. The imaging device according to claim 1, further comprising a weighting coefficient determination section that determines a plurality of weighting coefficients, each of which is assigned to a corresponding one of the wavelength signals or a corresponding one of the detection values, wherein
the controller performs the weighted average processing on a basis of the plurality of weighting coefficients determined by the weighting coefficient determination section.

6. The imaging device according to claim 5, wherein the weighting coefficient determination section determines the plurality of weighting coefficients on a basis elements included in the coefficient matrix.

7. The imaging device according to claim 5, wherein the weighting coefficient determination section determines the plurality of weighting coefficients on a basis of spectral sensitivity characteristics of the multispectral sensor section.

8. The imaging device according to claim 5, wherein the weighting coefficient determination section determines the plurality of weighting coefficients on a basis of elements included in the coefficient matrix and designation information that designates the narrowband signals.

9. The imaging device according to claim 5, wherein the weighting coefficient determination section determines the plurality of weighting coefficients for each of divided regions obtained by dividing a pixel region of the multispectral sensor section.

10. The imaging device according to claim 1, wherein the controller calculates the evaluation value by classifying the wavelength signals according to divided regions obtained by dividing a pixel region of the multispectral sensor section, and performing the weighted average processing on the plurality of detection values generated for each of the divided regions.

11. The imaging device according to claim 1, wherein the controller performs the exposure control on a basis of the evaluation value and information obtained from a device that performs processing using the plurality of narrowband signals.

12. A signal processing method comprising:

generating, from pixel signals that are a plurality of (N) wave signals output from a multispectral sensor, a plurality of (M: M>N) narrowband signals narrower in bandwidth than the wavelength signals using a coefficient matrix; and
calculating an evaluation value by performing weighted average processing on the plurality of wavelength signals or a plurality detection values generated using the plurality of wavelength signals, and performing exposure control of the multispectral sensor section on a basis of the calculated evaluation value.

[ FIG. 1 ]

[ FIG. 2 ]

WHEN N=4

[ FIG. 3 ]

```
                                              ⌒ 40
  ┌──────────────────────────────────────┐
  │     ⌒41              ⌒42              │
  │  ┌─────────┐    ┌──────────┐          │
  │  │ STORAGE │    │ ABSOLUTE │          │
  │  │         │    │  VALUE   │          │
  │  └─────────┘    │CALCULATOR│          │        W
  │                 └──────────┘          │────────  avg──▶
  │     ⌒43              ⌒44              │
  │  ┌──────────┐   ┌──────────┐          │
  │  │WEIGHTING │   │AVERAGING │          │
  │  │COEFFICIENT│  │PROCESSOR │          │
  │  │GENERATOR │   │          │          │
  │  └──────────┘   └──────────┘          │
  └──────────────────────────────────────┘
```

[ FIG. 4 ]

```
              ┌──────────┐
              │  START   │
              └─────┬────┘
                    │           S101
              ┌─────▼───────────────┐
              │ ACQUIRE COEFFICIENT │
              │ MATRIX              │
              └─────┬───────────────┘
                    │           S102
              ┌─────▼───────────────┐
              │ CALCULATE ABSOLUTE  │
              │ VALUE OF EACH       │
              │ ELEMENT OF          │
              │ COEFFICIENT MATRIX  │
              └─────┬───────────────┘
                    │           S103
              ┌─────▼───────────────┐
              │ GENERATE WEIGHTING  │
              │ COEFFICIENT LIST    │
              │ (W_list)            │
              └─────┬───────────────┘
                    │           S104
              ┌─────▼───────────────┐
              │ CALCULATE AVERAGE   │
              │ (Wavg) OF WEIGHTING │
              │ COEFFICIENT LIST    │
              │ (W_list)            │
              └─────┬───────────────┘
                    │
              ┌─────▼────┐
              │   END    │
              └──────────┘
```

[ FIG. 5 ]

[ FIG. 6 ]

[ FIG. 7 ]

SENSITIVITY

$s_k^2$

$s_k^1$

SPECTRAL SENSITIVITY DATA Sk OF CHANNEL k

...

$s_k^R$

WAVELENGTH

[ FIG. 8 ]

40

| 45 STORAGE | 46 BAND EXTRACTOR |
|---|---|
| 47 WEIGHTING COEFFICIENT GENERATOR | 48 AVERAGING PROCESSOR |

$W_{avg}$

[ FIG. 9 ]

```
            ┌─────────────┐
            │    START    │
            └──────┬──────┘
                   │            S301
      ┌────────────▼────────────┐
      │    ACQUIRE SPECTRAL      │
      │    SENSITIVITY DATA      │
      └────────────┬────────────┘
                   │            S302
      ┌────────────▼────────────┐
      │ EXTRACT DATA CORRESPONDING│
      │ TO EACH BAND OF NARROWBAND│
      │ SIGNAL FROM SPECTRAL     │
      │ SENSITIVITY DATA         │
      └────────────┬────────────┘
                   │            S303
      ┌────────────▼────────────┐
      │  GENERATE WEIGHTING      │
      │  COEFFICIENT LIST (W_list)│
      └────────────┬────────────┘
                   │            S304
      ┌────────────▼────────────┐
      │ CALCULATE AVERAGE (Wavg) OF│
      │ WEIGHTING COEFFICIENT    │
      │ LIST (W_list)            │
      └────────────┬────────────┘
                   │
            ┌──────▼──────┐
            │     END     │
            └─────────────┘
```

[ FIG. 10 ]

[ FIG. 11 ]

[ FIG. 12 ]

```
                    ( START )
                        |
                        v                    S401
          ┌──────────────────────────────┐
          │ OUTPUT INITIAL VALUE OF       │
          │ WEIGHTING COEFFICIENT         │
          └──────────────────────────────┘
                        |
                        v                    S402
          ┌──────────────────────────────┐
          │ ACQUIRE NARROWBAND SIGNAL     │
          └──────────────────────────────┘
                        |
                        v                    S403
          ┌──────────────────────────────┐
          │ EVALUATE ACQUIRED             │
          │ NARROWBAND SIGNAL             │
          └──────────────────────────────┘
                        |
                        v                    S404
          ┌──────────────────────────────┐
          │ GENERATE NEW WEIGHTING        │
          │ COEFFICIENT ON THE BASIS      │
          │ OF EVALUATION RESULT          │
          └──────────────────────────────┘
                        |
                        v                    S405
          ┌──────────────────────────────┐
          │ OUTPUT NEW WEIGHTING          │
          │ COEFFICIENT                   │
          └──────────────────────────────┘
                        |
                        v
                    (  END  )
```

[ FIG. 13 ]

[ FIG. 14 ]

| | | | ~ 11 |
| α1 | α2 | α3 | α4 |
| ... | | αj | |
| | | | |
| | | ... | αn |

| ~ αj | | | |
| ch1 | ch2 | ch1 | ch2 | ~ 12 |
| ch3 | ch4 | ch3 | ch4 |
| ch1 | ch2 | ch1 | ch2 |
| ch3 | ch4 | ch3 | ch4 |

| ch1 | ch1 |
| ch1 | ch1 | ~12

| ch2 | ch2 |
| ch2 | ch2 | ~12

| ch3 | ch3 |
| ch3 | ch3 | ~12

| ch4 | ch4 |
| ch4 | ch4 | ~12

INTEGRATED VALUE OF ch1 (DETECTION VALUE $D_1^j$)

INTEGRATED VALUE OF ch2 (DETECTION VALUE $D_2^j$)

INTEGRATED VALUE OF ch3 (DETECTION VALUE $D_3^j$)

INTEGRATED VALUE OF ch4 (DETECTION VALUE $D_4^j$)

[ FIG. 15 ]

[ FIG. 16 ]

[ FIG. 17 ]

[ FIG. 18 ]

[ FIG. 19 ]

```
                                              2

              ┌─────────────┐
              │  40         │
         ┌────┴──────────┐
         │  WEIGHTING    │
         │  COEFFICIENT  │
         │ DETERMINATION │
         │   SECTION     │
         └───────────────┘
      W avg      ↓ 80              90        E x      60
         ┌───────────────┐  ┌──────────┐       ┌──────────┐
         │   WEIGHTED    │ I'raw│          │ E v   │ EXPOSURE │
         │   AVERAG      │─────▶│ DETECTOR │──────▶│   CON-   │
         │  PROCESSOR    │      │          │       │ TROLLER  │
         └───────────────┘      └──────────┘       └──────────┘
              ↑  10                              20
         ┌───────────────┐         ┌──────────────┐
         │    IMAGE      │         │  NARROWBAND  │
         │ ACQUISI-      │─────────│    SIGNAL    │───────▶
         │   TION        │         │  GENERATOR   │
         │  SECTION      │         └──────────────┘
         └───────────────┘
```

I raw      IrawN          Inb        InbM

Iraw1                           N<M      Inb1

[ FIG. 20 ]

```
                                    80
         ┌─────────────────────────────┐
         │           81      82        │
  Iraw ──┼──────▶⊗──────▶┌─────────┐   │
         │       ▲       │ INTEG-  │   │──▶ I'raw
         │       │       │ RATION  │   │
         │       │       │  UNIT   │   │
  W avg ─┼───────┘       └─────────┘   │
         └─────────────────────────────┘
```

[ FIG. 21 ]

```
        ┌─────────────┐
        │    START    │
        └──────┬──────┘
               │           S501
        ┌──────▼──────────────┐
        │ ACQUIRE RAW SIGNAL  │
        │       Iraw          │
        └──────┬──────────────┘
               │           S502
        ┌──────▼──────────────┐
        │ DETERMINE WEIGHTING │
        │  COEFFICIENT Wavg   │
        └──────┬──────────────┘
               │           S503
        ┌──────▼──────────────┐
        │ PERFORM WEIGHTED    │
        │ AVERAGE PROCESSING  │
        └──────┬──────────────┘
               │           S504
        ┌──────▼──────────────┐
        │ CALCULATE EXPOSURE  │
        │  CONTROL VALUE Ex   │
        └──────┬──────────────┘
               │           S505
        ┌──────▼──────────────┐
        │ OUTPUT EXPOSURE     │
        │ CONTROL VALUE Ex TO │
        │ IMAGE ACQUISITION   │
        │ SECTION 10          │
        └──────┬──────────────┘
               │
        ┌──────▼──────┐
        │     END     │
        └─────────────┘
```

[ FIG. 22 ]

[ FIG. 23 ]

[ FIG. 24 ]

[ FIG. 25 ]

## INTERNATIONAL SEARCH REPORT

International application No.

**PCT/JP2023/009946**

**A. CLASSIFICATION OF SUBJECT MATTER**

*H04N 23/12*(2023.01)i; *H04N 23/54*(2023.01)i; *H04N 23/71*(2023.01)i
FI: H04N23/12; H04N23/54; H04N23/71

According to International Patent Classification (IPC) or to both national classification and IPC

**B. FIELDS SEARCHED**

Minimum documentation searched (classification system followed by classification symbols)

H04N23/12; H04N23/54; H04N23/71

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2018-98641 A (SONY SEMICONDUCTOR SOLUTIONS CORP.) 21 June 2018 (2018-06-21) fig. 25 | 1-12 |
| A | JP 2016-218991 A (CANON INC.) 22 December 2016 (2016-12-22) paragraph [0043] | 1-12 |
| A | JP 2001-86383 A (FUJI PHOTO FILM CO., LTD.) 30 March 2001 (2001-03-30) paragraph [0027] | 1-12 |
| A | JP 2002-158857 A (FUJI PHOTO FILM CO., LTD.) 31 May 2002 (2002-05-31) paragraphs [0024]-[0027], fig. 2 | 1-12 |

☐ Further documents are listed in the continuation of Box C.   ☑ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **11 May 2023** | **23 May 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
### Information on patent family members

| International application No. |
| --- |
| **PCT/JP2023/009946** |

| Patent document cited in search report | | | Publication date (day/month/year) | Patent family member(s) | | | Publication date (day/month/year) |
| --- | --- | --- | --- | --- | --- | --- | --- |
| JP | 2018-98641 | A | 21 June 2018 | US fig. 25 | 2019/0306471 | A1 | |
| JP | 2016-218991 | A | 22 December 2016 | US paragraph [0068] WO | 2020/0082517 2016/189818 | A1 A1 | |
| JP | 2001-86383 | A | 30 March 2001 | (Family: none) | | | |
| JP | 2002-158857 | A | 31 May 2002 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018098341 A
- JP 2020115640 A
- JP 2007127657 A
- JP 2022073791 A